# EUROPÄISCHE PATENTANMELDUNG

(11) **EP 0 924 325 A1**
(43) Veröffentlichungstag der Anmeldung: **23.06.1999**
(21) Anmeldenummer: 98121650.0
(22) Anmeldetag: 12.11.1998
(51) Int. Cl.: D02H 1/00, B65H 67/04, B65G 1/137

(54) **Hilfsmittel beim Bestücken eines Spulengatters**

(30) Priorität: 19.12.1997 DE 19756641
(71) Anmelder: Sucker-Müller-Hacoba GmbH & Co., D-41066 Mönchengladbach (DE)
(72) Erfinder: Voswinckel, Gerhard, 52070 Aachen (DE)
(74) Vertreter: Frese-Göddeke, Beate, Dr.

(57) **Zusammenfassung**

Es wird ein Gerät als Hilfsmittel der Bedienungsperson (12) beim vorbestimmt geordneten Bestücken eines Spulengatters (11) beschrieben. Um zu erreichen, daß die Bedienungsperson (12) bei der Bestükkungsarbeit in der Bewegungsfreiheit nicht eingeschränkt ist und alle Sinne für die auszuführende Arbeit einzusetzen sind, werden von der Bedienungsperson (12) mitzuführende, drahtlos auf einen Rechner (16) geschaltete Empfangs- und Sendemittel (13,21) zur akustischen Bestück-Anweisung sowie zur akustischen Bestätigung bzw. Rückmeldung der ausgeführten Anweisung vorgesehen.

## Beschreibung

Die Erfindung betrifft ein Gerät als Hilfsmittel der Bedienung beim vorbestimmt geordneten Bestücken eines Spulengatters. Ein Spulengatter oder Aufsteckgatter ist ein Gestell, auf das Abrollspulen von fadenförmigen Zwischenprodukten aufgesteckt werden, um letztere dem nächsten Arbeitsprozeß zuzuführen. Die Erfindung betrifft ferner ein Verfahren zum Bestücken von Spulengattern.

Auf ein Spulengatter werden, speziell bei Zettel- und Schärmaschinen, Spulen mit unterschiedlichen Farben oder mit unterschiedlicher Garnqualität in einem vorgegebenen Muster bzw. Rapport aufgesteckt. Das Muster bzw. der Rapport werden durch die im herzustellenden Kettbaum erstrebte Garnverteilung vorgegeben.

Aus WO 89/07671 ist es bekannt, als Bestückungshilfe beim Beladen von Spulengattern pro Spulentyp ein Aufsteckmuster in einer Steuervorrichtung zu speichern. Die einzelnen Aufsteckmuster werden als Ausgangssignale sequentiell abgerufen. Diese Ausgangssignale aktivieren Signalelemente, die jeder Aufsteckvorrichtung am Spulengatter zugeordnet sind.

Eine Weiterentwicklung, nämlich eine Anordnung zum Identifizieren derjenigen Aufsteckvorrichtungen, welche mit einer vorbestimmten Spulengattung zu bestücken sind, wird in DE 43 10 948 A1 beschrieben. Die bekannte Anordnung besitzt eine relativ zum Spulengatter verlagerbare Anzeigeeinrichtung, die jeweils eine Mehrzahl von Aufsteckvorrichtungen erfaßt. Um hierbei die Fehlerquellen bei manueller Arbeit ohne zusätzliche Hilfsmittel auszuschalten, wird nach DE 44 21 188 A1 vorgesehen, im Blickfeld der Bedienungsperson von Reihe zu Reihe weiterzuschaltende elektronische oder mechanische Anzeigemittel des aufzusteckenden Rapports vorzusehen. Auch in der japanischen Patentveröffentlichung 07243142A wird ein Spulengatter mit nach Farben geordneten Spulenplätzen beschrieben, hierbei wird ein PC zum Signalisieren der einzelnen Farbenplätze vorgesehen.

Als weiteres Hilfsmittel zum Bestücken eines Spulengatters wird in DE 42 11 687 A1 eine Bestückungsstation beschrieben, die ein zwei sich gegenüberliegende, vertikale Tragkonstruktionen aufweisendes Gestell umfaßt. An den Tragkonstruktionen werden vertikale Anzeigen derart angeordnet, daß mit einem zwischen den Konstruktionen stehenden Spulenwagen jeder Aufsteckvorrichtung eine Anzeige zugeordnet ist. Nach nach DE 44 21 189 A1 können Fehler im fertig bestückten Gatter aufgefunden werden, wenn das Gatter reihenweise mit einer CCD-Kamera mit Rückmeldung an einen Speicher abgetastet wird.

Alle diese bekannten Hilfsmittel zum Bestücken von Spulengattern mit Spulen unterschiedlicher Farben oder Qualitäten setzen Lampen oder dergleichen optische Signalmittel voraus, die an den jeweils mit Spulen zu besetzenden Positionen aufleuchten. Die Installation eines solchen Gatters ist aufwendig, weil jede Spulenposition mit einer Lampe usw. auszustatten ist.

Die beschriebene Entwicklung (insbesondere DE 43 10 948 A1) führte zu einer über einen Rechner anzusteuernden Anzeigetafel, die die Positionen anzeigt, auf die Spulen eines Typs, z.B. rote Spulen, aufzustecken sind und die nach Quittierung dieses Vorgangs auf die nächste Position bzw. den nächsten Befehl springt. Die Quittung (für die ausgeführte Aufsteckarbeit) erfolgt über einen Taster oder eine Kontaktierung. Diese Systeme haben durchweg den Nachteil, daß die Befehlsgabe für die Bestückung mit demselben Sinnesorgan, nämlich dem Auge, wie die Bestückungsarbeit selbst zu überwachen ist.

In der Textilindustrie gibt es auch Fernsteuer- und Überwachungseinrichtungen, z.B. für Spulautomaten (DE 40 31 419 A1) oder für Wickelmaschinen (CH 673 663 A5). Im ersten Fall wird eine Vorrichtung zur Datenerfassung und Überwachung von Wartungsarbeiten eines Spulautomaten mit einer Datenverarbeitungseinrichtung zum Erstellen eines Wartungsplanes offenbart. Im anderen Fall werden die Betriebsdaten einer Wickelmaschine gemessen und über ein Modem in eine Datenvergleichseinrichtung übertragen.

Es gibt in der Technik Systeme zum Ausgeben von Sprachinformationen in Reaktion auf eingegebene Sprachsignale (DE 37 32 849 A1 und DE 44 32 632 A1). Ferner gibt es sprachgeführte Ansteuervorrichtungen für beliebige Endgeräte und sprachgesteuerte Fernbedienungssysteme (DE 40 29 698 A1, DE 40 39 562 A1 und DE 196 17 294 A1). Derartige Geräte sind als Schaltuhren, beispielsweise zum selbständigen Ein- und Ausschalten von Radio- oder Tonbandgeräten, insbesondere auch als Hilfsmittel für Blinde, vorgesehen. Aus DE 43 31 710 A1 ist auch ein Verfahren zum Erstellen und Textbearbeiten von Textdokumenten unmittelbar durch Sprechen und unter Zuhilfenahme eines Spracherkenners bekannt. Die Textdaten können mittels Sprache korrigiert werden.

Der Erfindung liegt die Aufgabe zugrunde, eine Bestückungshilfe für Gatter zu schaffen, die die Bewegungsfreiheit der Bedienungsperson nicht einschränkt sowie für Empfang oder Weitergabe der jeweiligen Information zusätzliche Bewegungen nicht erforderlich macht.

Für das eingangs genannte Gerät als Hilfsmittel beim vorbestimmt geordneten Bestücken eines Spulengatters ist die erfindungsgemäße Lösung gekennzeichnet durch von der Bedienungsperson mitzuführende, drahtlos auf einen Rechner geschaltete Empfangs- und Sendemittel zur akustischen Bestück-Anweisung sowie zur akustischen Bestätigung bzw. Rückmeldung der ausgeführten Anweisung.

Die Erfindung betrifft auch ein Verfahren zum geordneten Bestücken von Spulen diverser Farben und/oder Garnqualitäten aufnehmenden Spulengattern. Hierzu besteht die Lösung darin, daß die das Bestücken ausführende Bedienungsperson von einem Befehlsgeber akustisch und drahtlos über Funk oder Lautsprecher angewiesen wird und daß die Bedienungsperson dem Rechner die Ausführung eines Befehls akustisch und drahtlos über Funk oder Lautsprecher mitteilt. Einige Verbesserungen und weitere Ausgestaltungen der Erfindung werden in den Unteransprüchen beschrieben.

Durch die Erfindung wird erreicht, daß die jeweilige Anweisung von einem Rechner, z.B. über eine Sprach-Software sprachlich formuliert - also akustisch - an die Bedienungsperson über Funk oder dergleichen weiterzugeben ist. Über ein Funkmikrofon oder dergleichen kann die abgeschlossene Tätigkeit von der Bedienungsperson akustisch quittiert werden, der Rechner kann dann akustisch die nächste Arbeitsanweisung geben. Die Bedienungsperson hört die jeweilige Information zum Ausführen jedes einzelnen Arbeitsschritts und quittiert die Ausführung durch Sprechen, etwa durch den akustischen Befehl: "weiter" oder "in Ordnung". Die Bedienungsperson bestimmt ihr Arbeitstempo selbst, da sie den Vorgang in Bewegung quittieren kann.

Ein wesentlicher Vorteil der Erfindung besteht darin, daß die Bedienungsperson für die Aufsteckarbeit alle Sinne zugleich einsetzen kann. Die Person hört den Bestück-Befehl (z.B. "rote Spule auf A/3"). Sie sieht die Spule und die Position und greift die Spule mit den Händen, um sie aufzustecken. Schon während der Aufsteckarbeit kann die Bedienungsperson die Quittung über die ausgeführte Arbeit in das erfindungsgemäß mitgeführte Mikrofon sprechen. Der angeschlossene Rechner sagt dann - ebenfalls akustisch - der Bedienungsperson über einen Kopfhörer Typ und Position der nächsten aufzusteckenden Spule.

Das Arbeiten mit dem erfindungsgemäßen Gerät kann an die Fähigkeit und Schnelligkeit der Bedienungsperson auch derart angepaßt werden, daß zwei oder mehr Positionen und Spulentypen angesagt werden, die dann in einem Zuge abzuarbeiten sind. Dadurch können Bewegungsabläufe gespart und gleichzeitig mehrere Spulen gegriffen und mit beiden Händen aufgesteckt werden.

Der Rechner kann so programmiert werden, daß er auf einen bestimmten akustischen Befehl seine Aussage wiederholt. Selbstverständlich läßt sich die akustische Übertragung auf die Sprache programmieren, die der jeweiligen Bedienungsperson am vertrautesten ist. Die Erfindung bzw. das erfindungsgemäße Gerät können ohne großen Aufwand für jedes neue oder existierende Spulengatter nachgerüstet werden, da nur die individuellen Gatter-Koordinaten einzugeben sind und für die Bedienungsperson eindeutige Koordinatenbezeichnungen angebracht werden müssen.

Anhand der schematischen Darstellung eines Ausführungsbeispiels werden Einzelheiten der Erfindung erläutert.

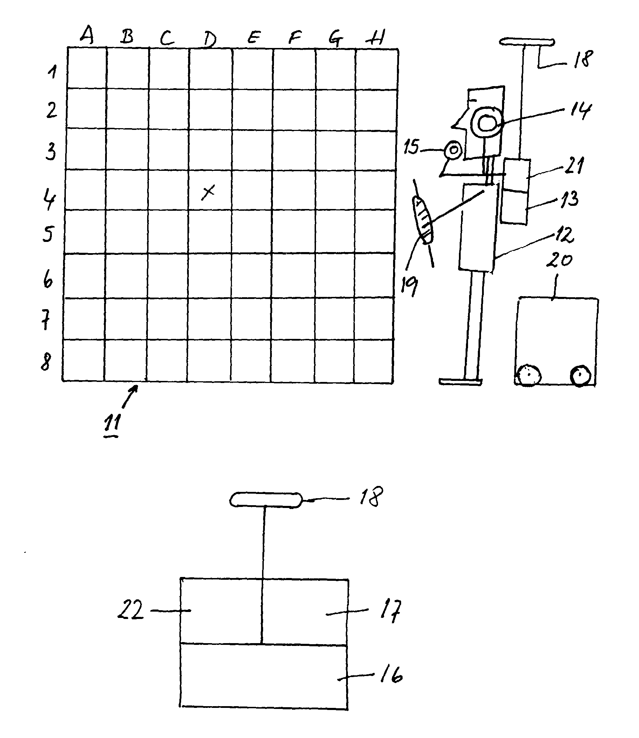

In der beigefügten Figur werden ein Spulengatter 11, eine Bedienungsperson 12 mit Empfänger 13, Kopfhörer 14 und Mikrofon 15 sowie ein Rechner 16 mit Sender 17 symbolisiert. Die diversen Positionen des Spulengatters 11 werden durch die Koordinaten A, B, C, usw. und 1, 2, 3 usw. vorgegeben und bezeichnet.

Wenn beispielsweise der Rechner 16 (über die Antenne 18 seines Senders 17 sowie den Empfänger 13) der Bedienungsperson 12 akustisch (über den Kopfhörer 14) den Befehl erteilt, eine rote Spule 19 in die Position D4 zu setzen, greift dieser sich eine solche Spule aus einem festen oder mitgeführten Spulenspeicher 20 und steckt die Spule an der Stelle D4 des Gatters 11 auf. Die Bedienungsperson 12 kann dann sofort - über das Mikrofon 15 und einen damit verbundenen (mitgeführten) Sender 21 - den Rechner 16 (über einen diesem zugeordneten Empfänger 22) von der Ausführung des Befehls berichten. Der Rechner 16 gibt dann über seinen Sender 17 einen weiteren Befehl an die Bedienungsperson 12.

Es wird ein Gerät als Hilfsmittel der Bedienungsperson beim vorbestimmt geordneten Bestücken eines Spulengatters beschrieben. Um zu erreichen, daß die Bedienungsperson bei der Bestükkungsarbeit in der Bewegungsfreiheit nicht eingeschränkt ist und alle Sinne für die auszuführende Arbeit einzusetzen sind, werden von der Bedienungsperson mitzuführende, drahtlos auf einen Rechner geschaltete Empfangs- und Sendemittel zur akustischen Bestück-Anweisung sowie zur akustischen Bestätigung bzw. Rückmeldung der ausgeführten Anweisung vorgesehen.

### Bezugszeichenliste

- 11: = Spulengatter
- 12: = Bedienungsperson
- 13: = Empfänger (12)
- 14: = Kopfhörer
- 15: = Mikrofon
- 16: = Rechner
- 17: = Sender (16)
- 18: = Antenne (17)
- 19: = rote Spule
- 20: = Spulenspeicher
- 21: = Sender (15)
- 22: = Empfänger (16)

## Patentansprüche

1. Gerät als Hilfsmittel der Bedienungsperson (12) beim vorbestimmt geordneten Bestücken eines Spulengatters (11)
**gekennzeichnet durch**
von der Bedienungsperson (12) mitzuführende, drahtlos auf einen Rechner (16) geschaltete Empfangs- und Sendemittel (13, 14, 15, 21) zur akustischen Bestück-Anweisung sowie zur akustischen Bestätigung bzw. Rückmeldung der ausgeführten Anweisung.

2. Gerät nach Anspruch 1,
**dadurch gekennzeichnet,**
daß als Empfangs- und Sendemittel zur akustischen Bestück-Anweisung und zur akustischen Bestätigung oder Rückmeldung ein Kopfhörer (14) mit Empfänger (13) bzw. ein Mikrofon (15) mit Sender (21) vorgesehen sind.

3. Gerät nach Anspruch 1 oder 2,
**dadurch gekennzeichnet,**
daß ein direkter Austausch der jeweiligen Befehle über Lautsprecher und Mikrofon vorgesehen ist.

4. Verfahren zum geordneten Bestücken von Spulen diverser Farben und/oder Garnqualitäten aufnehmenden Spulengattern,
**dadurch gekennzeichnet,**
daß die das Bestücken ausführende Bedienungsperson von einem Befehlsgeber akustisch und drahtlos über Funk oder Lautsprecher angewiesen wird und daß die Bedienungsperson dem Rechner die Ausführung eines Befehls akustisch und drahtlos über Funk oder Lautsprecher mitteilt.
